# EUROPEAN PATENT APPLICATION

(11) **EP 2 860 867 A1**
(43) Date of publication of application: **15.04.2015**
(21) Application number: 13794765.1
(22) Date of filing: 15.02.2013
(51) Int. Cl.: H02N 11/00, F03G 7/10

(54) **ELECTRIC GENERATOR**

(30) Priority: 25.05.2012 ES 201200562
(71) Applicant: García Carvajal, Antonio, 18015 Granada (ES)
(72) Inventor: García Carvajal, Antonio, 18015 Granada (ES)
(74) Representative: Pons Ariño, Angel
(86) International application number: PCT/ES2013/000038
(87) International publication number: WO 2013/175032

(57) **Abstract**

Electric generator comprising a plurality of symmetrical articulated arms that act as a lever on plunger/piston assemblies to pressurize a fluid used to drive a turbine.

## Description

### ELECTRIECOGRA.

Electriecogra is a new machine and a new process for producing ecologically clean, free and abundant electricity.

### FIELD OF THE INVENTION

The present invention relates to the sector of energy, more specifically the production of electricity.

### STATE OF THE ART

Currently the production of energy in the world causes serious problems to HUMANITY such as:
a. Economic problems - high price.
b. Environmental problems - pollution of the atmosphere, rivers, seas etc.
c. High risks relating to nuclear energy.
d. Continual increase in demand, etc.

It would therefore be desirable to find a solution to these problems that is, DURABLE, CLEAN, ECONOMIC AND ABUNDANT.

The present invention thus relates to a new machine and a new procedure to solve the above problems by producing CLEAN, FREE AND ABUNDANT electricity.

### DESCRIPTION OF THE MACHINE

1 Electric motor pulley
2 Pulley belt
3 Machine pulley
4 Crankshaft
5 & 6 Arms
7 & 8 Articulations
9 & 10 Arms [longer than arms 5 & 6]
11 & 12 Articulations
Arms 13 & 14 [which act as LEVERS]
15 Axis of machine fulcrum of the LEVERS
16 & 17 Articulations
18 & 19 Arms
20 & 21 Articulations
22 & 23 Pistons
24 & 25 Cylinders
26 & 27 Fluid inlet valves [water or air]
28 & 29 Fluid outlet valves [with a smaller diameter than valves 26 & 27]
30 & 31 Valves to extract air that may accidentally enter the cylinders, if the fluid used is water
32 Machine's axis of symmetry
Figure 1 Parts of the machine

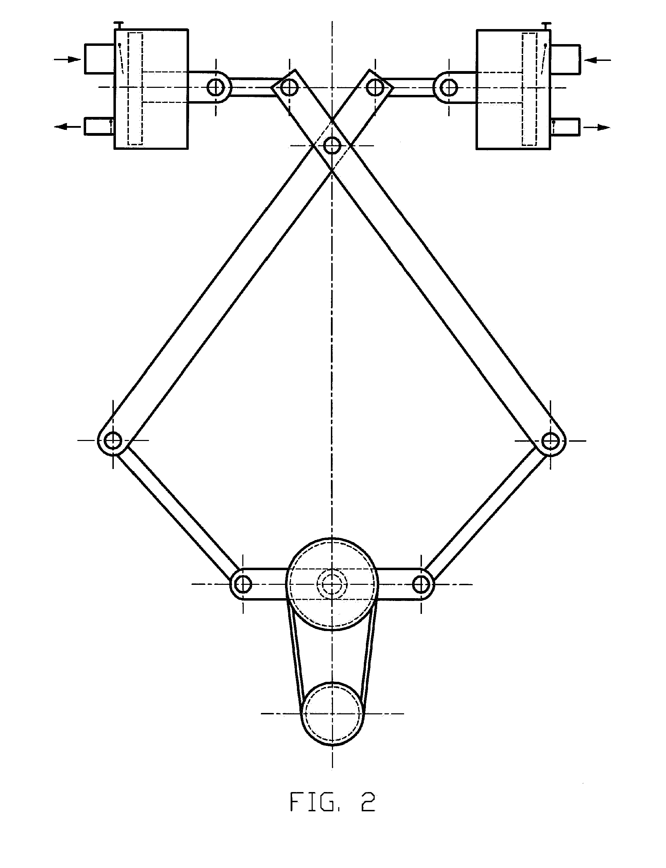

Figure 2 Elevation of the machine

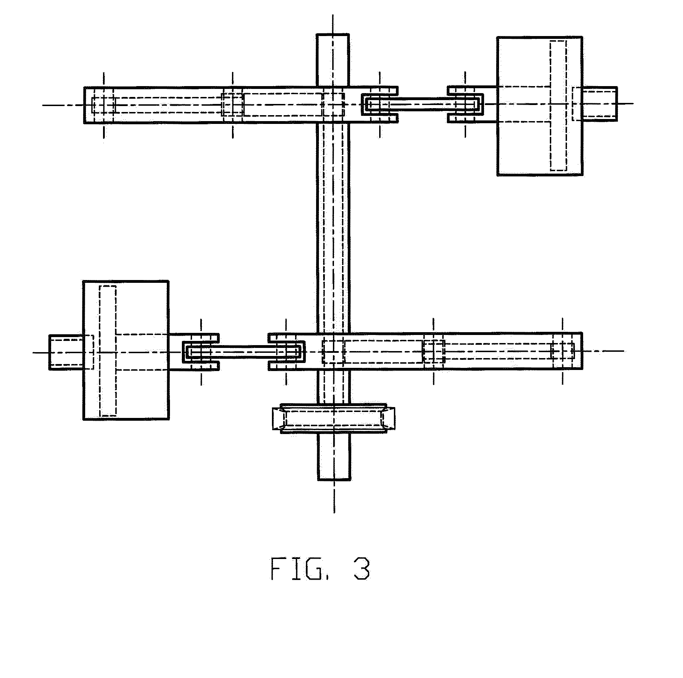

Figure 3 Plan of the machine

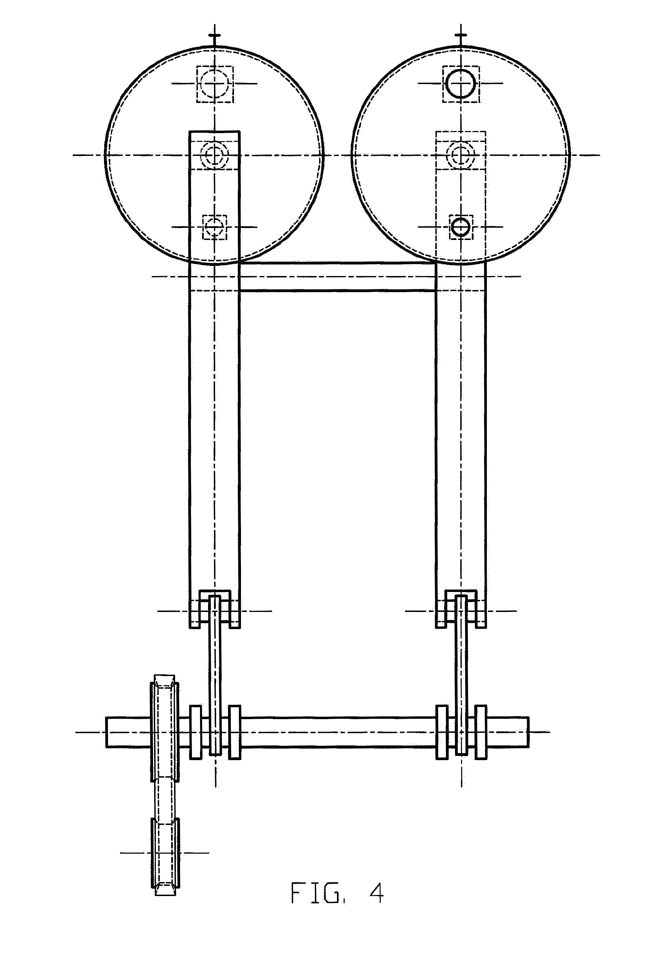

Figure 4 Profile of the machine
Figure 5 Elevation of the crankshaft

### THE FUNDAMENTALS OF PHYSICS THAT THE MACHINE IS BASED ON

Electriecogra uses two important physical principles:

### 1. The law of the LEVER

Arms [13 & 14] act as levers, with the axis [15] acting as a fulcrum about which the said arms rotate; a force is applied to articulations [11 &12] resulting in an ongoing to-and-fro movement.

### 2. Concurrent forces that are equal and opposing

The arms that correspond to each side of the axis of symmetry [32], are identical, thus the value of the resultant force from arms [13 & 14] and [9 & 10] which act on the crankshaft [4] is ZERO, which is what keeps energy consumption of the machine to a minimum during its operation, and hence maximizes gain.

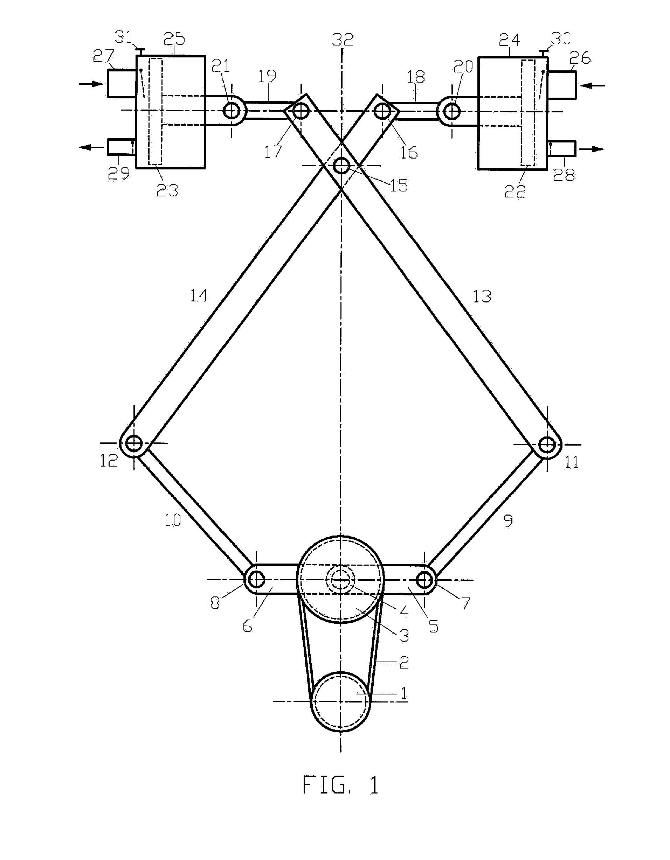

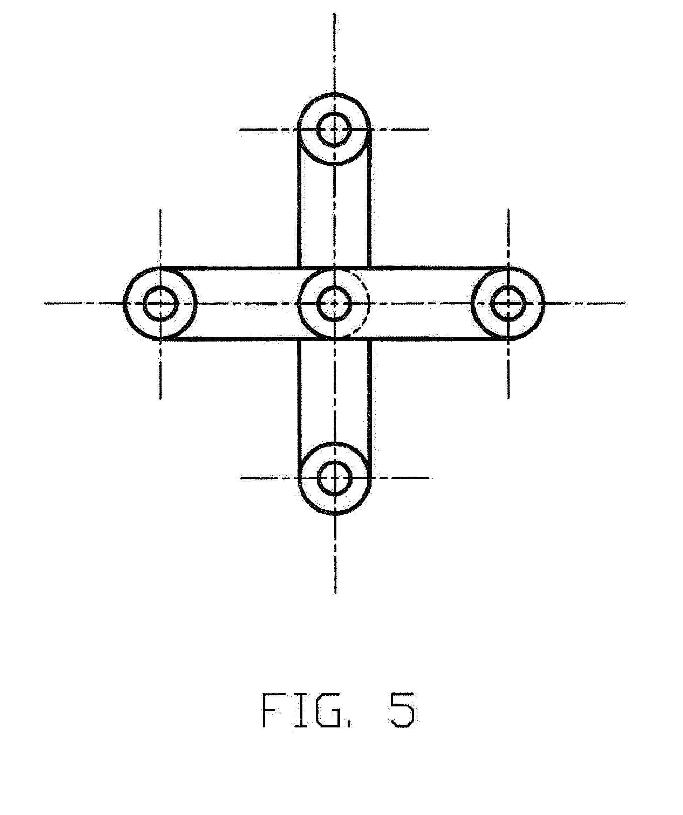

Electriecogra comprises at least two groups of two arms in each group, see FIG. 1, each group of two arms is arranged in a way to make a cross with the previous group, see FIG. 5.

Arms [5 & 6] of the crankshaft are shorter than arms [9 &10].

Arms [13 & 14] are perforated near the upper end by the shaft [15], in such a way as to act as LEVERS when they move.

### OPERATION

The process for producing electricity comprises the following:
An electric motor rotates pulley [1] which, by means of the pulley belt [2], transmits the rotation to pulley [3], which in turn rotates the crankshaft [4]. Arms [5 & 6] of crankshaft [4] transmit a circular motion to articulations [7 and 8] which by means of arms [9 & 10] produce an ongoing to-and-fro movement in articulations [11 & 12]. Said articulations never cross from one side of the axis of symmetry of the machine to the other side, because arms [9 & 10] are longer than arms [5, 6].

The to-and-fro movement acquired by arms [13 & 14] is transmitted to their upper ends, above the shaft [15] but with a force which MULTIPLIED due to LEVER effect.

The force received by articulations [16 & 17], is a function of the length that is the distance from articulations [11 & 12] to the shaft [15].

To-and-fro movement is transmitted to the pistons [22 & 23] by means of articulations [16 & 17], arms [18 & 19] and articulations [20 & 21].

Pistons [22 & 23], provide great thrust to the fluid [water or air] which is in the interior of the cylinders [24 & 25].

Fluid outlet valves [28 & 29] from the cylinders [24 & 25] are narrower than the inlet valves [26 & 27], therefore if the fluid is water, it will come out at HIGH PRESSURE.

The jets of fluid are directed toward a turbine which drives a powerful generator of electrical current, which produces a GREAT DEAL OF ELECTRICITY.

The electriecogra comprises two or more sets of arms identical to those previously described, and with identical functions, connected through the crankshaft [4] and the shaft [15], therefore, since said arms are synchronized, the fluid jets will impact continuously against a turbine, producing continuous movement in said turbine.

When the generator is running, the motor that drives the machine is disconnected from its current source and connected to that produced by the Electriecogra generator, becoming SELF-SUFFICIENT from that moment on, PRODUCING MUCH MORE POWER THAN IT CONSUMES, and thus producing CONTINUOUS MOTION.

The surplus energy, which will be a great deal, may be distributed to other users.

If the fluid used is water, the water deposit would be at a greater height than that of the cylinder to prevent accidental entry of air into said cylinders.

Water falling from the turbine is collected in a deposit; wherefrom it is lifted to the deposit which feeds the cylinders, and is thus reusable.

If the fluid used is air, a deposit is required to store it and when it reaches the proper pressure, it is used to drive the turbine.

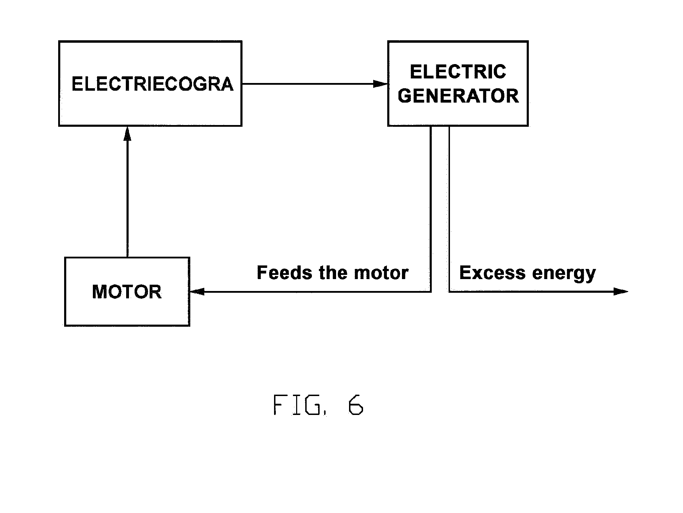

A diagram of the operation of the electriecogra is shown in FIG. 6 to help better understand its operation.

The embodiment of the invention is very simple because it consists fundamentally of rigid arms with ends adapted to rotate about axes.

## Claims

1. ELECTRIECOGRA is a new machine and a new procedure to produce CLEAN, FREE AND ABUNDANT electricity. The machine consists of several sets of articulated, symmetrical, synchronized arms, wherein corresponding arms located at each of both sides of the machine's symmetry axis are identical; wherein the arms are joined together at two points: the crankshaft [4] and the shaft [15], the latter acting as a fulcrum and point of rotation of the levers [13 & 14], wherein the arms [13 & 14] are given a to-and-fro movement so as to act as LEVERS.

2. The entire ELECTRIECOGRA process system comprises an electric motor, the new machine and an electric generator **CHARACTERIZED IN THAT**:
A - Arms [13 and 14] acquire a continuous to-and-fro movement at their lower end which is transmitted to the upper end, MULTIPLYING THE FORCE RECEIVED BY ACTING AS LEVERS.
B - The movement acquired by the upper ends of the arms [13 and 14] can be transformed into rotational motion or continuous to-and-fro movement.
C - It produces CLEAN, FREE electricity in quantities MUCH IN EXCESS OF WHAT IT CONSUMES.
D - Once it is set in motion, it is fed by what it produces, thus becoming SELF-SUFFICIENT - CONTINUOUS MOTION.
E - This effect is caused by the arrangement of the different articulated arms, which, starting from a rotary movement, is converted into another continuous to-and-fro movement or rotational movement, multiplying the power received.
F - The sets of arms are joined together at two points: the crankshaft [4] and the shaft [15].
G - The fluid outlet valves of the cylinders are smaller than the intake valves so as to increase the outlet fluid pressure to whatever value is desired.
